# EUROPÄISCHE PATENTSCHRIFT

(11) **EP 1 187 984 B1**
(45) Veröffentlichungstag und Bekanntmachung des Hinweises auf die Patenterteilung: **04.01.2006**
(21) Anmeldenummer: 00988606.0
(22) Anmeldetag: 10.11.2000
(51) Int. Cl.: F02M 61/20, F02M 45/00, F16F 9/53

(54) **STEUERVENTIL SOWIE MIT EINEM SOLCHEN STEUERVENTIL VERSEHENES KRAFTSTOFF-EINSPRITZVENTIL**
CONTROL VALVE AND FUEL INJECTION VALVE PROVIDED WITH A CONTROL VALVE OF THIS TYPE
VALVE DE COMMANDE ET SOUPAPE D'INJECTION DE CARBURANT DOTEE DE CETTE VALVE DE COMMANDE

(30) Priorität: 15.11.1999 DE 19954864
(43) Veröffentlichungstag der Anmeldung: 20.03.2002
(73) Patentinhaber: ROBERT BOSCH GMBH, 70442 Stuttgart (DE)
(72) Erfinder: BRENK, Achim, 75236 Kaempfelbach-Bilfingen (DE); KLENK, Wolfgang, 74369 Loechgau (DE); GORDON, Uwe, 71706 Markgroeningen (DE); MACK, Manfred, 89174 Altheim (DE)
(86) Internationale Anmeldenummer: PCT/DE2000/004012
(87) Internationale Veröffentlichungsnummer: WO 2001/036812

(56) Entgegenhaltungen:
- EP-A- 0 342 882
- DE-A- 19 735 232
- US-A- 5 019 119

## Beschreibung

### Stand der Technik

Die Erfindung betrifft ein Kraftstoff-Einspritzventil.

Aus der DE 197 35 232 ist ein Kraftstoff-Einspritzventil bekannt, bei dem ein Dämpfungsraum vorgesehen ist, der eine Öffnungsbewegung einer Düsennadel des Einspritzventils dämpfen kann. Der Dämpfungsraum ist mit einem elektrorheologischen Fluid gefüllt und weist einen Auslaß auf, um den herurn zwei Elektroden angeordnet sind. Durch Anlegen eines elektrischen Feldes an das elektrorheologische Fluid im Bereich der Elektroden kann dort die Viskosität der Flüssigkeit variiert werden. Entsprechend ändert sich der Strömungswiderstand, der einem Entweichen des elektrorheologischen Fluids aus dem Dämpfungsraum und somit einem Öffnen der Düsennadel entgegenwirkt. Auf diese Weise kann durch geeignete Erzeugung des elektrischen Feldes zwischen den Elektroden in Abhängigkeit von Betriebskenngrößen einer Verbrennungskraftmaschine, bei der das Einspritzventil verwendet wird, das Einspritzverhalten des Einspritzventils beeinflußt werden.

Die Aufgabe der Erfindung besteht darin, ein Steuerventil zu schaffen, mit dem unterschiedliche Einspritzquerschnitte bei einem Kraftstoff-Einspritzventil erzielt werden können.

In der US 5 019 119 ist ein Einspritzventil für Kraftstoff gezeigt, das ein bewegliches Ventilelement bzw. eine bewegliche Düsennadel aufweist. Durch einen Pumpkolben wird Kraftstoff in einem Druckraum verdichtet und der Düsennadel zugeführt, die dann abhängig vom Druck des zugeführten Kraftstoffs die Einspritzöffnung freigibt. Vom Druckraum führt eine Leitung zu einem elektrorheologischen Steuerventil, das die Leitung öffnen oder verschließen kann, so dass der Druckaufbau im Druckraum beeinflusst werden kann und dadurch die eingespritzte Kraftstoffmenge.

### Vorteile der Erfindung

Ein erfindungsgemäßes Kraftstoff-Einspritzventil, wie es in Patentanspruch 1 definiert ist, ermöglicht es, das Öffnungsverhalten der Düsennadel eines Kraftstoff-Einspritzventils entweder unmittelbar oder mittelbar, beispielsweise durch eine zwischengeschaltete Fluidkammer, in der gewünschten Weise zu beeinflussen, ohne daß eine zusätzliche hydraulische Steuerleitung erforderlich ist; zum Ansteuern des erfindungsgemäßen Kraftstoff-Einspritzventil ist lediglich ein elektrischer Anschluß erforderlich.

Gemäß einer Ausführungsform der Erfindung ist vorgesehen, daß das Verdrängerelement eine Druckstange ist, die in den Druckraum hineinragt. Bei dieser Ausgestaltung wird bei einer Verlagerung der Druckstange nur ein sehr geringes Volumen von elektrorheologischem Fluid verschoben. Aus diesem Grunde ist kein Pufferraum mit variablem Volumen erforderlich, der das verdrängte Volumen aufnimmt; allein die Kompressibilität der elektrorheologischen Flüssigkeit ermöglicht die entsprechende Volumenverschiebung.

Gemäß einer weiteren Ausführungsform der Erfindung ist vorgesehen, daß das Verdrängerelement mit einem Kolben versehen ist, der den Druckraum an einer Seite abschließt, daß auf der Rückseite des Kolbens ein Pufferraum gebildet ist und daß der Druckraum mit dem Pufferraum durch einen Überströmkanal verbunden ist. Bei dieser Ausgestaltung wird bei einer kleinen Verschiebung des Verdrängerelementes ein vergleichsweise großes Volumen an elektrorheologischem Fluid verschoben, da der Kolben quasi als Verstärkung wirkt. Di es bedeutet umgekehrt, daß bereits ein relativ kleiner Strömungswiderstand und sich daraus ergebende, relativ kleine Druckkräfte im elektrorheologischen Fluid ausreichen, einer Verschiebung des Verdrängerelementes eine große Widerstandskraft entgegenzusetzen.

Weiter bietet das erfindungsgemäße Kraftstoff-Einspritzventil, den Vorteil, daß mit geringem Aufwand, insbesondere ohne separate hydraulische Steuerleitung, eine Umschaltung zwischen verschiedenen Betriebszuständen erreicht werden kann. Das elektrisch schaltbare Steuerventil ermöglicht es nämlich, einen Öffnungshub der Düsennadel in nahezu beliebiger Weise zu bremsen oder zu beenden. Dies ist insbesondere von Vorteil, wenn das Einspritzventil eine Spritzlochwahlmöglichkeit vorsieht, so daß durch Auswahl des Öffnungshubes unterschiedliche Spritzquerschnitte verwendet werden können.

Vorteilhafte Ausgestaltungen der Erfindung ergeben sich aus den Unteransprüchen.

### Zeichnungen

Die Erfindung wird nachfolgend unter Bezugnahme auf verschiedene Ausführungsbeispiele beschrieben, die in den beigefügten Zeichnungen dargestellt sind. In diesen zeigen:
- Fig. 1 in einer schematischen Schnittansicht ein erfindungsgemäßes Kraftstoff-Einspritzventil mit erfindungsgemäßem Steuerventil gemäß einer ersten Ausführungsform;
- Fig. 2 in einer schematischen Schnittansicht ein erfindungsgemäßes Kraftstoff-Einspritzventil mit erfindungsgemäßem Steuerventil gemäß einer zweiten Ausführungsform;
- Fig. 3 in einer schematischen Schnittansicht ein erfindungsgemäßes Kraftstoff-Einspritzventil mit erfindungsgemäßem Steuerventil gemäß einer dritten Ausführungsform;
- Fig. 4 in einer schematischen Schnittansicht ein nicht erfindungsgemäßes Kraftstoff-Einspritzventil;
- Fig. 5 in einer schematischen Schnittansicht und in vergrößertem Maßstab das bei dem nicht erfindungsgemäßen Kraftstoff-Einspritzventil von Fig. 4 verwendete Steuerventil;
- Fig. 6 in einer schematischen Schnittansicht ein ebenfalls nicht erfindungsgemäßes Kraftstoff-Einspritzventil; und
- Fig. 7 in einer schematischen Schnittansicht und in vergrößertem Maßstab das bei dem Kraftstoff-Einspritzventil von Fig. 7 verwendete Steuerventil.

### Beschreibung der Ausführungsbeispiele

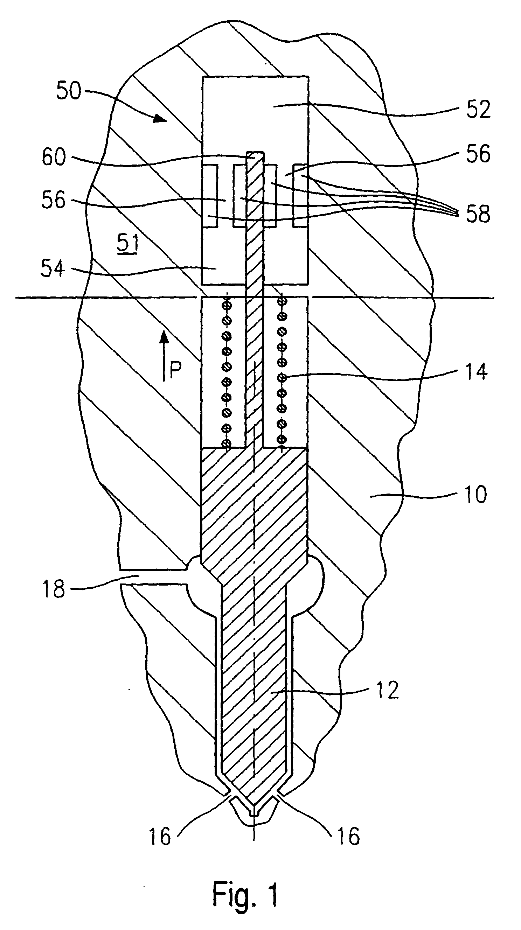

In Fig. 1 ist ein Kraftstoff-Einspritzventil mit Steuerventil gemäß einer ersten Ausführungsform der Erfindung gezeigt. Das Einspritzventil enthält ein Düsengehäuse 10, in welchem eine Düsennadel 12 gegen die Wirkung einer Rückstellfeder 14 verschiebbar angebracht ist. Im Düsengehäuse 10 sind Spritzlöcher 16 für den einzuspritzenden Kraftstoff ausgebildet, der mittels einer Zufuhrleitung 18 zugeführt wird. Der Kraftstoff kann aus den Spritzlöchern 16 austreten, sobald die Düsennadel 12 ausgehend von ihrer Ruhelage, in der sie die Spritzlöcher verschließt, einen Öffnungshub in der Richtung des Pfeiles P durchgeführt hat. Diese Öffnungsbewegung kann auf verschiedene Weise hervorgerufen werden; die entsprechenden Vorrichtungen und Verfahren sind zum einen dem Fachmann auf dem Gebiet der Kraftstoff-Einspritzanlagen gut bekannt und zum anderen nicht Gegenstand der Erfindung, so daß hierauf nicht weiter eingegangen wird.

Die Kraftstoff-Einspritzdüse ist mit einem Steuerventil 50 versehen, das in einem Ventilgehäuse 51 einen Druckraum 52 und einen Pufferraum 54 aufweist, der mit dem Druckraum durch Überströmkanäle 56 verbunden ist. Der Druckraum, der Pufferraum und die Überströmkanäle sind mit einem elektrorheologischen Fluid gefüllt, also einem Fluid, dessen Viskosität lokal durch das Anlegen eines elektrischen Feldes beeinflußt werden kann. Im Bereich der Überströmkanäle 56 sind Elektroden 58 angeordnet, mittels denen ein elektrisches Feld erzeugt werden kann, welches das dort vorhandene elektrorheologische Fluid in jedem Überströmkanal durchsetzt.

Von außerhalb des Steuerventils 50 ragt durch den Pufferraum hindurch ein Verdrängerelement 60 in den Druckraum 52 hinein. Das Verdrängerelement 60 ist hier als Druckstange ausgebildet, die fest mit der Düsennadel 12 verbunden ist. Somit führt eine Öffnungsbewegung der Düsennadel 12 dazu, daß das Verdrängerelement 60 in den Druckraum 52 hineingeschoben wird, wodurch ein Volumen von elekirorheologischem Fluid aus dem Druckraum 52 durch die Überströmkanäle 56 in den Pufferraum 54 hinein verschoben wird. Der Pufferraum 54 kann aufgrund der Kompressibilität der elektrorheologischen Flüssigkeit dieses zusätzliche Volumen problemlos aufnehmen.

Wenn in den Überströmkanälen 56 kein elektrisches Feld vorliegt, kann das elektrorheologische Fluid unter Überwindung eines vergleichsweise geringen Strömungswiderstandes aus dem Druckraum 52 in den Pufferraum 54 verschoben werden, wenn die Düsennadel 12 eine Öffnungsbewegung ausführt und dabei das Verdrängerelement 60 in den Druckraum 52 hineingeschoben wird. Um die Öffnungsbewegung der Düsennadel 12 zu beeinflussen, kann jedoch von einer (nicht gezeigten) Steuerelektronik ein elektrisches Feld zu einem gewünschten Zeitpunkt im Bereich der Überströmkanäle 56 erzeugt werden. Dadurch ergibt sich eine starke Erhöhung der Viskosität, so daß einer Verschiebung eines Volumens von elektrorheologischem Fluid aus dem Druckraum 52 in den Pufferraum 54 ein hoher Widerstand entgegengesetzt wird. Dies kann so weit gehen, daß eine Volumenverschiebung durch die Überströmkanäle unterbunden wird. Auf diese Weise kann die Öffnungsbewegung der Düsennadel 12 zu einem gewünschten Zeitpunkt gebremst oder gar beendet werden, indem einfach ein elektrisches Feld im Bereich der Überströmkanäle 56 erzeugt wird.

Das elektrorheologische Fluid wirkt in dem elektrischen Feld somit wie eine verstellbare Drossel, die nach Bedarf auch ganz verschlossen werden kann und damit die Funktion eines Ventils annimmt. Auf diese Weise kann ein hydraulischer Hubanschlag gebildet werden, dessen Größe und auch Steifigkeit die Endposition der Düsennadel beim Öffnungshub bestimmt.

Alternativ zu den gezeigten Überströmkanälen 56 kann auch ein Ringspalt verwendet werden, wenn eine ringförmige innere Elektrode und eine diese in einem Abstand umgebende ringförmige äußere Elektrode verwendet wird.

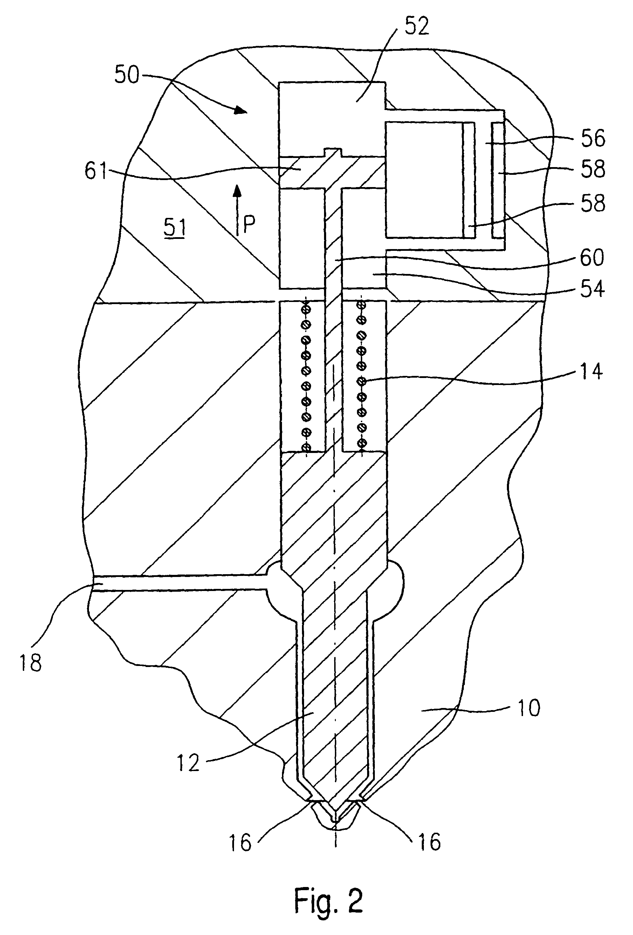

In Fig. 2 ist ein Kraftstoff-Einspritzventil mit Steuerventil gemäß einer zweiten Ausführungsform der Erfindung gezeigt. Soweit bei dieser Ausführungsform Bauelemente verwendet werden, die von der ersten Ausführungsform bekannt sind, werden dieselben Bezugszeichen verwendet. Hinsichtlich ihrer Funktion wird auf die obigen Erläuterungen verwiesen.

Im Unterschied zur ersten Ausführungsform ist hier am Verdrängerelement 60 ein Kolben 61 ausgebildet, der den Druckraum 52 vom Pufferraum 54 trennt. Der Überströmkanal 56 ist bei dieser Ausführungsform im Ventilgehäuse 51 ausgebildet und enthält in gleicher Weise wie bei der vorhergehenden Ausführungsform zwei Elektroden 58, um in einem Bereich des Überströmkanals ein elektrisches Feld zu erzeugen.

Bei einer Öffnungsbewegung der Düsennadel 12 wird vom Kolben 61 ein Volumen von elektrorheologischem Fluid aus dem Druckraum 52 durch den Überströmkanal in den Pufferraum 54 verlagert. Der Pufferraum vergrößert sich entsprechend der Bewegung des Kolbens, so daß nur das durch das Einschieben des Verdrängerelements 60 in das Steuerventil verdrängte Volumen durch die Elastizität bzw. Kompressibilität der elektrorheologischen Flüssigkeit im Pufferraum 54 aufgenommen werden muß.

Das Öffnungsverhalten der Düsennadel 12 kann bei dem Kraftstoff-Einspritzventil gemäß der zweiten Ausführungsform in gleicher Weise wie bei der ersten Ausführungsform durch den Widerstand beeinflußt werden, der einer Volumenverschiebung zwischen dem Druckraum 52 und dem Pufferraum 54 aufgrund der Viskosität des elektrorheologischen Fluids im Bereich zwischen den beiden Elektroden 58 entgegengesetzt wird.

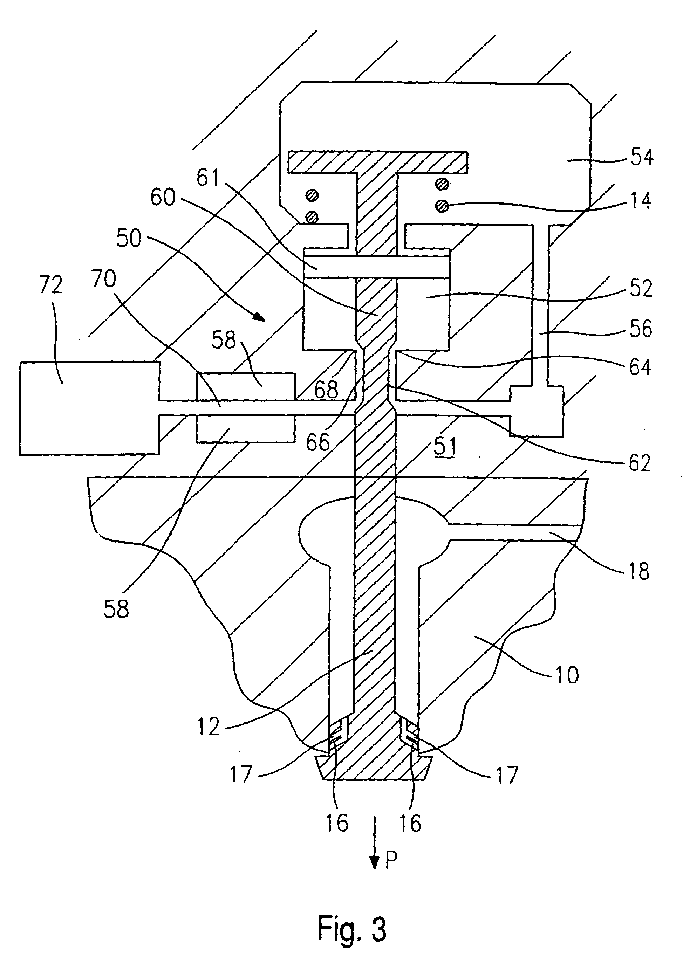

In Fig. 3 ist ein Kraftstoff-Einspritzventil mit einem Steuerventil gemäß einer dritten Ausführungsform der Erfindung gezeigt. Für Bauteile, die aus den vorangegangenen Ausführungsformen bekannt sind, werden dieselben Bezugszeichen verwendet, und es wird auf die obigen Erläuterungen verwiesen.

Im Unterschied zu den Einspritzventilen gemäß der ersten und zweiten Ausführungsform, bei denen die Öffnungsbewegung der Düsennadel zum Inneren des Gehäuses gerichtet ist (innenöffnendes Ventil), handelt es sich bei dem Einspritzventil gemäß der dritten Ausführungsform um eine Konstruktion, bei der die Düsennadel zum Öffnen der Spritzlöcher aus dem Gehäuse herausbewegt wird (außenöffnendes Ventil).

Die Düsennadel 12 ist an ihrem vorderen Ende zusätzlich zu den Spritzlöchern 16, die entlang einem Kreis auf demselben Niveau angeordnet sind, mit Spritzlöchern 17 versehen, die ebenfalls entlang einem Kreis angeordnet sind. Die Spritzlöcher 17 sind weiter zum Inneren des Düsengehäuses 10 hin angeordnet als die Spritzlöcher 16, so daß bei einem Öffnungshub der Düsennadel zuerst die Spritzlöcher 16 und anschließend die Spritzlöcher 17 freigegeben werden.

Auch bei dieser Ausführungsform wird ein Kolben 61 verwendet, der mit dem als Druckstange ausgebildeten Verdrängerelement 60 zusammenwirkt, das eine Verlängerung der Düsennadel 12 ist. Der Kolben 61 verdrängt ein Fluid aus dem Druckraum 52 durch den Überströmkanal 56 in einen Pufferraum 54, in welchem bei dieser Ausführungsform auch die Rückstellfeder 14 angeordnet ist.

Das Verdrängerelement 60 ist mit einer ersten Steuernut 62 versehen, die mit einer Steuerkante 64 am Gehäuse 10 zusammenwirkt. Die Steuernut 62 ermöglicht eine Verbindung vom Druckraum 52 zum Überströmkanal 56, solange die Steuerkante 64 nicht an dem Verdrängerelement anliegt, dieses sich also nicht um eine Strecke, die dem in axialer Richtung gemessenen Abstand zwischen der Steuerkante 64 und dem Druckraum-seitigen Ende der Steuernut 62 entspricht, ausgehend aus ihrer in Fig. 3 gezeigten Ruhestellung verlagert hat.

An dem Verdrängerelement 60 ist eine zweite Steuernut 66 ausgebildet, die mit einer zweiten Steuerkante 68 im Gehäuse zusammenwirkt. Die zweite Steuernut 66 steht mit der ersten Steuernut 62 nicht in Verbindung und ist gegenüber dieser derart versetzt angeordnet, daß ihr der Steuerkante 68 zugeordnetes Ende weiter in den Druckraum 52 hineinragt als das der ersten Steuerkante 64 zugeordnete Ende der ersten Steuernut 62.

Die zweite Steuernut 66 ermöglicht eine Verbindung zwischen dem Druckraum 52 und einem Sammelkanal 70, der zu einem Sammelraum 72 führt. An dem Sammelkanal 70 sind die beiden Elektroden 58 angeordnet, mittels denen ein elektrisches Feld erzeugt werden kann.

Das beschriebene Einspritzventil arbeitet in der folgenden Weise: Während einer ersten Phase der Öffnungsbewegung der Düsennadel 12 verschiebt der Kolben 61 insbesondere durch die geöffnete Steuemut 62 ein Volumen von elektrorheologischem Fluid aus dem Druckraum 52 durch den Überströmkanal 56 in den Pufferraum 54. Sobald das Ende der ersten Steuernut 62 auf die Steuerkante 64 trifft, ist diese Verschiebung von Fluid in den Pufferraum 54 nicht mehr möglich. Die Steuernut 62 ist dabei so ausgestaltet, daß sie von der ersten Steuerkante 64 nach einem Hub geschlossen wird, der zum Öffnen der ersten Spritzlöcher 16 ausreicht.

Nach diesem ersten Hub kann das elektrorheologische Fluid den Druckraum 52 ausschließlich über die zweite Steuernut 66 verlassen, und zwar zum Sammelraum 72 hin. Diese Verschiebung des Fluids kann beeinflußt werden durch die beiden Elektroden 58, die bei Bedarf einen derart hohen Strömungswiderstand des elektrorheologischen Fluids hervorrufen können, daß dies einer geschlossenen zweiten Steuernut gleichkommt. Dies bedeutet, daß ein weiterer Öffnungshub der Düsennadel 12 bis in eine Stellung, in der die zweiten Spritzlöcher 17 geöffnet sind, nicht möglich ist.

Wenn dagegen zusätzlich zu den ersten Spritzlöchern 16 auch die zweiten Spritzlöcher 17 verwendet werden sollen, werden die Elektroden 58 nicht aktiviert, so daß der Kolben 61 das elektrorheologische Fluid aus dem Druckraum 52 über die zweite Steuernut 64 und dem Sammelkanal 70 in den Sammelraum 72 verschieben kann, so daß ein Hub der Düsennadel 12 bis in eine Stellung möglich ist, in der die beiden Reihen von Spritzlöchern 16, 17 genutzt werden.

Allen bisher beschriebenen Ausführungsformen ist gemeinsam, daß das elektrorheologische Fluid unmittelbar von einem mit der Düsennadel verbundenen Bauteil, nämlich dem Verdrängerelement 60 und/oder dem Kolben 61, verdrängt wurde, wenn die Düsennadel einen Öffnungshub ausgeführt hat. Somit konnte der Öffnungshub der Düsennadel dadurch beeinflußt werden, daß der einer Verschiebung eines Volumens des elektrorheologischen Fluids entgegenwirkende Strömungswiderstand beeinflußt wurde.

Die erste und die zweite Ausführungsform haben als Gemeinsamkeit, daß eine Aktivierung der Elektroden des Steuerventils immer dann erfolgen muß, wenn der Öffnungshub der Düsennadel gestoppt werden soll. Im Gegensatz dazu kann bei der dritten Ausführungsform von vornherein entschieden werden, ob ein Öffnen der Düsennadel des Einspritzventils nur mit einem ersten Hub oder mit einem größeren zweiten Hub möglich sein soll. Wenn nur ein Öffnen mit einem ersten Hub gewünscht wird, können die Elektroden permanent aktiviert bleiben; im Gegensatz zu der ersten und der zweiten Ausführungsform ist nämlich auch in diesem Zustand noch ein begrenztes Öffnen der Düsennadel möglich.

Es ist auch möglich, bei der ersten und zweiten Ausführungsform mittels der Drosselwirkung, die im Bereich des Überströmkanals erzielt wird, den Öffnungshub der Düsennadel zu dämpfen, so daß ein langsamerer Anstieg der Spritzrate erzielt wird. Die Veränderung der Viskosität des elektrorheologischen Fluids erfolgt dabei innerhalb so kurzer Zeitspanne, daß noch während der Öffnungsphase der Düsennadel die Nadeldämpfung verändert werden kann.

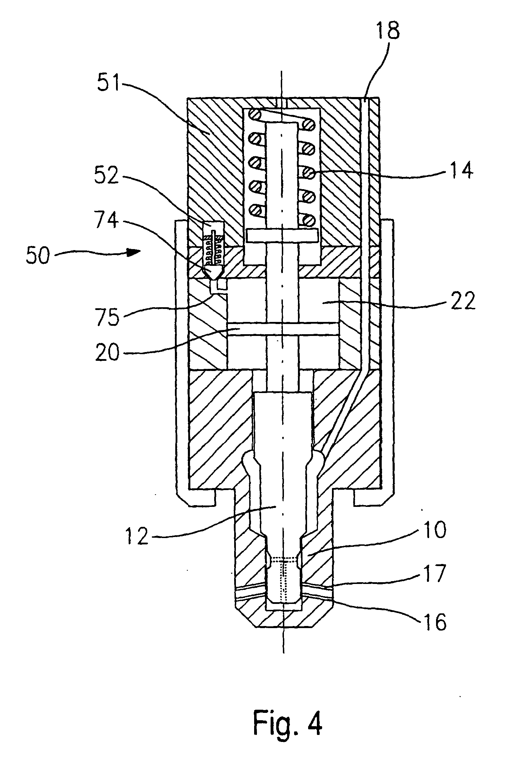

In Fig. 4 ist ein nicht erfindungsgemäßer Kraftstoff-Einspritzventil mit einem Steuerventil gezeigt. Auch bei dieser Ausführungsform werden für Bauteile, die von den vorangegangenen Ausführungsformen bekannt sind, dieselben Bezugszeichen verwendet, und es wird auf die obigen Erläuterungen verwiesen.

Bei der Ausführungsform von Fig. 4 handelt es sich ähnlich wie bei der ersten und der zweiten Ausführungsform um ein sogenanntes innenöffnendes Einspritzventil, also ein Einspritzventil, bei dem die Düsennadel zum Öffnen einen Öffnungshub ausführen muß, der zum Inneren des Düsengehäuses 10 gerichtet ist. Die Düsennadel 12 ist mit einem Schubelement 20 in der Form eines Kolbens verbunden, das in einer Fluidkammer 22 verschiebbar ist, die mit Kraftstoff gefüllt ist.

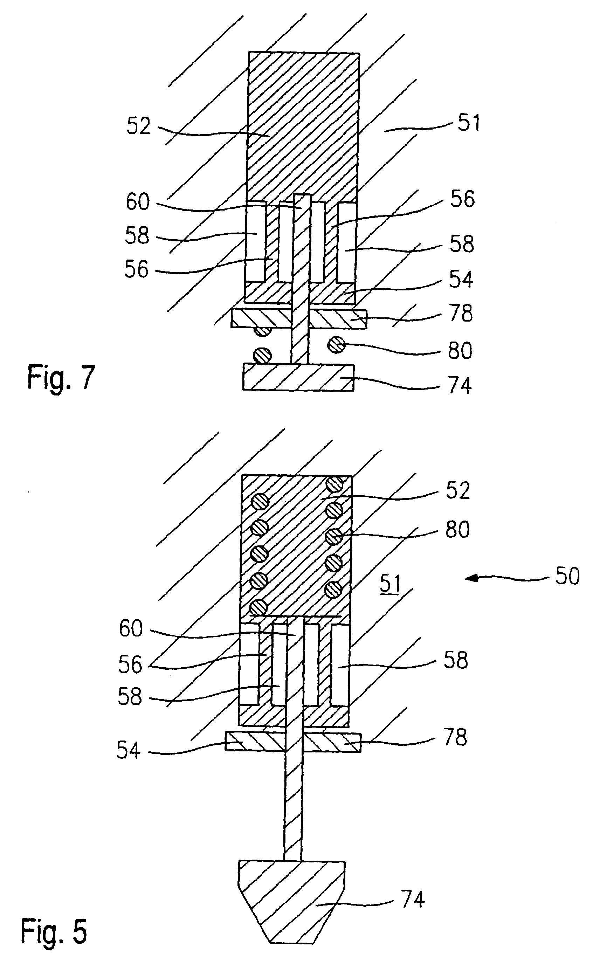

Von der Fluidkammer 22 zweigt ein Auslaßkanal 75 ab, der zu dem Steuerventil 50 führt. Dieses ist in Figur 4 nur schematisch dargestellt; der genaue Aufbau ergibt sich aus Figur 5. Das Steuerventil 50 weist ein Ventilelement 74 in der Form eines Konus auf, der den Auslaßkanal 75 öffnen oder schließen kann. Mit dem Ventilelement 74 ist das Verdrängerelement 60 verbunden, das wieder als Druckstange ausgebildet ist. Das Verdrängerelement ist so angeordnet, daß es zum Abheben des Ventilelementes weiter in den Druckraum 52 eindringen muß. Der entgegenwirkende Widerstand beruht vergleichbar mit dem von Figur 1 bekannten Aufbau darauf, daß einer Verschiebung ein es Volumens von elektrorheologischem Fluid aus dem Druckraum 52 heraus durch den Überströmkanal 56 in den Pufferraum 54 ein variabler Widerstand entgegengesetzt werden kann. Im Unterschied zur Gestaltung des Steuerventils gemäß Figur 1 ist bei dieser Ausführungsform eine Druckfeder 80 vorgesehen, die im Inneren des Druckraumes 52 angeordnet ist, sich über einen Federteller 82 an dem Verdrängerelement 60 abstützt und das Ventilelement 74 in die den Auslaßkanal 75 verschließende Stellung beaufschlagt.

Die Funktionsweise ist die folgende: Wenn die Elektroden 58 nicht aktiviert werden und folglich das Verdrängerelement 60 in den Druckraum 52 eingeschoben werden kann, ergibt sich ein vergleichsweise großes Volumen, welches das Fluid aufnehmen kann, das bei einem Öffnungshub der Düsennadel 12 vom Schubelement 20 verdrängt wird. Hierdurch ergibt sich eine vergleichsweise geringe Steifigkeit des an der Verdrängung von Fluid aus der Fluidkammer 22 beteiligten hydraulischen Systems, was einen Öffnungshub der Düsennadel 12 bis in eine Stellung ermöglicht, in der sowohl die Spritzlöcher 16 der ersten Reihe als auch die Spritzlöcher 17 der zweiten Reihe freigegeben ist. Wenn dagegen die Elektroden 58 aktiviert sind, kann das Ventilelement 74 nicht vom Auslaßkanal 75 abgehoben werden. Als Folge davon ergibt sich ein vergleichsweise geringes Volumen für das hydraulische System, das für eine Verdrängung von Fluid durch das Schubelement 20 relevant ist, und somit eine vergleichsweise große Steifigkeit, so daß sich in der Fluidkammer 22 ein solcher Druck aufbaut, daß nur ein kurzer Öffnungshub der Düsennadel möglich ist. Dies kann durch selektives Aktivieren der Elektroden dann erfolgen, wenn die Düsennadel 12 eine Öffnungsbewegung derart weit ausgeführt hat, daß gerade die erste Reihe von Spritzlöchern 16 freigegeben ist, während die zweite Reihe von Spritzlöchern 17 noch geschlossen ist. Die Schaltzeiten zum Umschalten des Steuerventils zwischen einem Zustand, in welchem der Auslaßkanal 75 geöffnet ist, und einem Zustand, in welchem der Auslaßkanal verschlossen ist, betragen in der Größenordnung von unter einer Millisekunde, so daß ein Umschalten zwischen den verschiedenen Zuständen während des Betriebs möglich ist.

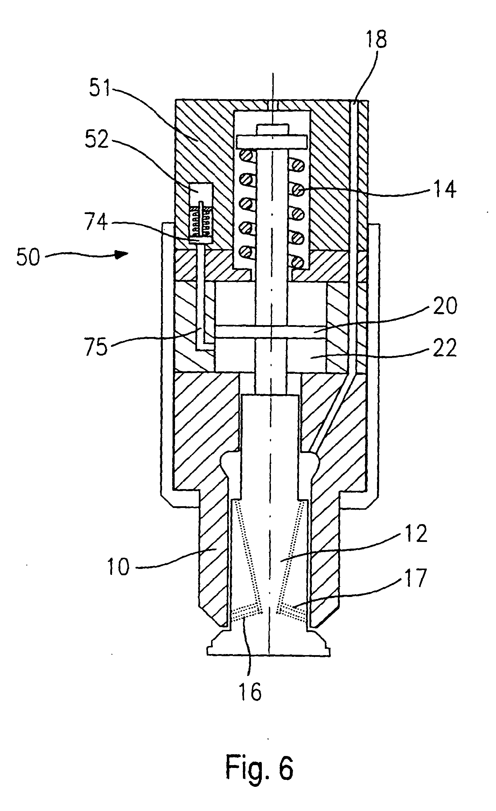

In Fig. 6 ist ein ebenfalls nicht erfindungsgemäßes Kraftstoff-Einspritzventil mit Steuerventil gezeigt. Auch bei dieser Ausführungsform werden für Bauteile, die von den vorhergehenden Ausführungsformen bekannt sind, dieselben Bezugszeichen verwendet, und es wird auf die dortigen Erläuterungen verwiesen.

Ähnlich wie bei der dritten Ausführungsform handelt es sich hier um ein außenöffnendes Einspritzventil, also ein Einspritzventil, bei dem die Düsennadel einen Öffnungshub durchführt, der zum Außenraum des Düsengehäuses 10 gerichtet ist. Die Düsennadel 12 ist auch hier mit zwei Reihen von Spritzlöchern 16, 17 versehen, die in Abhängigkeit von der Größe des Öffnungshubes freigegeben werden. Das bei dem Kraftstoff-Einspritzventil gemäß der fünften Ausführungsform verwendete Steuerventil, das in Figur 6 nur schematisch und in Figur 7 detailliert dargestellt ist, weist ein Ventilelement 74 auf, welches mit einem Auslaßkanal 75 einer Fluidkammer 22 zusammenwirkt. Ähnlich der in Figur 4 gezeigten Ausführungsform dient das Ventilelement 74 dazu, durch Öffnen oder Schließen des Auslaßkanals die Steifigkeit des hydraulischen Systems zu variieren, das einer Verschiebung des Schubelementes 20 entgegenwirkt. Im Unterschied zu dem in Figur 5 gezeigten Steuerventil ist die Druckfeder 80 außerhalb des Druckraumes 52 angeordnet.

Die Steuerventile, nach Fig. 4 bis 7, haben gemeinsam, daß nur ein sehr kleines Volumen mit elektrorheologischem Fluid gefüllt ist. Dieses kleine Volumen von elektrorheologischem Fluid dient lediglich dazu, die Schaltbewegung eines Ventilelementes zu steuern. Die eigentliche Rückwirkung auf die Düsennadel 12 erfolgt durch ein von dem elektrorheologischen Fluid getrenntes Fluid, das vorzugsweise der von dem Einspritzventil einzuspritzende Kraftstoff ist.

Ein besonderer Vorteil des erfindungsgemäßen Kraftstoff-Einspritzventils besteht darin, daß nur eine sehr geringe Energiemenge zum Schalten erforderlich ist. Diese Energiemenge kann der elektrischen Energieversorgung eines Fahrzeugs entnommen werden und außerdem nach dem Schaltvorgang zu einem großen Teil wieder zurückgewonnen werden.

## Patentansprüche

1. Kraftstoff-Einspritzventil mit einem Düsengehäuse (10) in dem Spritzlöcher (16) für den auszuspritzenden Kraftstoff ausgebildet sind, und einer Düsennadel (12), die in dem Düsengehäuse (10) verschiebbar ist und in einer Ruhelage die Spritzlöcher (16) verschließt, und einem Steuerventil (50), das ein Ventilgehäuse (51) mit einem Druckraum (52) aufweist, wobei der Druckraum (52) mit einem elektrorheologischen Fluid gefüllt ist, und zwei Elektroden (58), die ein elektrisches Feld an das elektrorheologische Fluid anlegen können, **dadurch gekennzeichnet, dass** ein Verdrängerelement (60) vorgesehen ist, das in dem Ventilgehäuse (51) verschiebbar ist und in den Druckraum (52) hineinragt, wobei das Verdrängerelement (60) des Steuerventils (50) mit der Düsennadel (12) gekoppelt ist.

2. Kraftstoff-Einspritzventil nach Anspruch 1, **dadurch gekennzeichnet, daß** eine der Elektroden (58) an einer Seite des Druckraumes (52) angeordnet ist.

3. Kraftstoff-Einspritzventil nach Anspruch 1 oder 2, **dadurch gekennzeichnet, daß** das Verdrängerelement (60) eine Druckstange ist, die in den Druckraum (52) hineinragt.

4. Kraftstoffeinspritzventil nach einem der vorhergehenden Ansprüche, **dadurch gekennzeichnet, daß** der Druckraum (52) mit mindestens einem Überströmkanal (56) versehen ist und die Elektroden im Bereich dieses Überströmkanals angeordnet sind.

5. Kraftstoff-Einspritzventil nach Anspruch 4, **dadurch gekennzeichnet, daß** der Überströmkanal (56) durch einen Ringspalt zwischen den beiden Elektroden (58) gebildet ist.

6. Kraftstoff-Einspritzventil nach einem der Ansprüche 1 oder 2, **dadurch gekennzeichnet, daß** das Verdrängerelement mit einem Kolben (61) versehen ist, der den Druckraum (52) an einer Seite abschließt, daß auf der Rückseite des Kolbens ein Pufferraum (54) gebildet ist und daß der Druckraum mit dem Pufferraum durch einen Überströmkanal (56) verbunden ist.

7. Kraftstoffeinspritzventil nach Anspruch 6, **dadurch gekennzeichnet, daß** die Elektroden (58) am Überströmkanal angeordnet sind.

8. Kraftstoff-Einspritzventil nach einem der Ansprüche 6 und 7, **dadurch gekennzeichnet, daß** das Verdrängerelement (60) mit einer ersten Steuernut (62) versehen ist, die so angeordnet ist, daß sie einen Auslaß aus dem Druckraum (52) nach einem ersten Hub des Verdrängerelements (60) schließt, daß das Verdrängerelement (60) mit einer zweiten Steuernut (66) versehen ist, die den Druckraum mit einem Sammelkanal (70) verbindet, der zu einem Sammelraum (72) führt, und daß die Elektroden (58) an dem Sammelkanal (70) angeordnet sind.

## Claims

1. Fuel injection valve, with a nozzle housing (10), in which injection holes (16) for the fuel to be ejected are formed, and with a nozzle needle (12) which can be displaced in the nozzle housing (10) and, in a position of rest, closes the injection holes (16), and with a control valve (50) which has a valve housing (51) with a pressure space (52), the pressure space (52) being filled with an electrorheological fluid, and with two electrodes (58) which can apply an electrical field to the electrorheological fluid, **characterized in that** a displacer element (60) is provided, which can be displaced in the valve housing (51) and projects into the pressure space (52), the displacer element (60) of the control valve (50) being coupled to the nozzle needle (12).

2. Fuel injection valve according to Claim 1, **characterized in that** one of the electrodes (58) is arranged on one side of the pressure space (52).

3. Fuel injection valve according to Claim 1 or 2, **characterized in that** the displacer element (60) is a plunger rod which projects into the pressure space (52).

4. Fuel injection valve according to one of the preceding claims, **characterized in that** the pressure space (52) is provided with at least one overflow duct (56), and the electrodes are arranged in the region of this overflow duct.

5. Fuel injection valve according to Claim 4, **characterized in that** the overflow duct (56) is formed by an annular gap between the two electrodes (58).

6. Fuel injection valve according to either one of Claims 1 or 2, **characterized in that** the displacer element is provided with a piston (61) which closes off the pressure space (52) on one side, **in that** a buffer space (54) is formed on the rear side of the piston, and **in that** the pressure space is connected to the buffer space by means of an overflow duct (56).

7. Fuel injection valve according to Claim 6, **characterized in that** the electrodes (58) are arranged at the overflow duct.

8. Fuel injection valve according to one of Claims 6 and 7, **characterized in that** the displacer element (60) is provided with a first control groove (62) which is arranged in such a way that it closes an outlet from the pressure space (52) after a first stroke of the displacer element (60), **in that** the displacer element (60) is provided with a second control groove (66) which connects the pressure space to a collecting duct (70) which leads to a collecting space (72), and **in that** the electrodes (58) are arranged at the collecting duct (70).

## Revendications

1. Injecteur de carburant comprenant un boîtier de buse (1) dans lequel des orifices d'éjection sont formés pour le carburant à éjecter, une aiguille d'injecteur (12) mobile à l'intérieur du boîtier de buse (10) et qui ferme les orifices d'éjection (16) dans une position de repos, une soupape de commande (50) qui présente un boîtier de soupape (51) muni d'une chambre de pression (52), la chambre de pression (52) étant remplie d'un fluide électrorhéologique, et deux électrodes (58) qui peuvent appliquer un champ électrique au fluide électrorhéologique,
**caractérisé en ce qu'**
un poussoir (60) coulissant à l'intérieur du boîtier de soupape (51) pénètre dans la chambre de pression (52), le poussoir (60) de la soupape de commande (50) étant couplé à l'aiguille d'injecteur (12).

2. Injecteur de carburant selon la revendication 1,
**caractérisé en ce que**
l'une des électrodes (58) est disposée sur une face de la chambre de pression (52).

3. Injecteur de carburant selon la revendication 1 ou 2,
**caractérisé en ce que**
le poussoir (60) est une tige de pression qui fait saillie dans la chambre de pression (52).

4. Injecteur de carburant selon l'une quelconque des revendications précédentes,
**caractérisé en ce que**
la chambre de pression (52) est munie d'au moins un canal de transfert (56) et les électrodes sont disposées dans la zone de ce canal de transfert.

5. Injecteur de carburant selon la revendication 4,
**caractérisé en ce que**
le canal de transfert (56) est formé par une fente annulaire entre les deux électrodes (58).

6. Injecteur de carburant selon l'une quelconque des revendications 1 ou 2,
**caractérisé en ce que**
le poussoir est muni d'un piston (61) qui ferme la chambre de pression (52) d'un côté, une chambre tampon (54) est formée au niveau de la face arrière du piston, et la chambre de pression est reliée à la chambre tampon par un canal de transfert (56).

7. Injecteur de carburant selon la revendication 6,
**caractérisé en ce que**
les électrodes (58) sont disposées au niveau du canal de transfert.

8. Injecteur de carburant selon l'une quelconque des revendications 6 et 7,
**caractérisé en ce que**
le poussoir (60) est muni d'une première rainure de commande (62) disposée pour fermer une sortie de la chambre de pression (52) après une première course du poussoir (60), le poussoir (60) est muni d'une deuxième rainure de commande (66) qui relie la chambre de pression à un canal collecteur (70) menant à une chambre collectrice (72), et les électrodes (58) sont disposées au niveau du canal collecteur (70).
